(19) Europäisches Patentamt
European Patent Office
Office européen des brevets

(11) EP 4 183 827 A1

(12) **EUROPEAN PATENT APPLICATION**
published in accordance with Art. 153(4) EPC

(43) Date of publication:
**24.05.2023 Bulletin 2023/21**

(21) Application number: **21843297.9**

(22) Date of filing: **15.07.2021**

(51) International Patent Classification (IPC):
***C08K 5/053*** $^{(2006.01)}$ ***C08K 5/13*** $^{(2006.01)}$
***C08K 5/3477*** $^{(2006.01)}$ ***C08K 5/49*** $^{(2006.01)}$
***C08L 1/00*** $^{(2006.01)}$ ***C08L 101/00*** $^{(2006.01)}$

(52) Cooperative Patent Classification (CPC):
**C08K 5/053; C08K 5/13; C08K 5/3477; C08K 5/49; C08L 1/00; C08L 101/00**

(86) International application number:
**PCT/JP2021/026678**

(87) International publication number:
**WO 2022/014686 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.07.2020 JP 2020121669**

(71) Applicant: **ADEKA CORPORATION**
**Arakawa-ku**
**Tokyo**
**116-8554 (JP)**

(72) Inventors:
- **TEZUKA, Tomomasa**
  **Saitama-shi, Saitama 336-0022 (JP)**
- **SON, Chansu**
  **Saitama-shi, Saitama 336-0022 (JP)**

(74) Representative: **Gill Jennings & Every LLP**
**The Broadgate Tower**
**20 Primrose Street**
**London EC2A 2ES (GB)**

(54) **ADDITIVE COMPOSITION, RESIN COMPOSITION CONTAINING SAME, AND MOLDED ARTICLE OF SAID RESIN COMPOSITION**

(57) Provided are an additive composition capable of improving the mechanical characteristics and color tone of a cellulose nanofiber-containing resin composition, a resin composition, and a molded article of the resin composition. The additive composition includes (A) a cellulose nanofiber and (D) a nucleating agent.

EP 4 183 827 A1

## Description

### TECHNICAL FIELD

The present invention relates to an additive composition, a resin composition containing the same, and a molded article thereof, and more particularly relates to an additive composition capable of improving the mechanical characteristics and color tone of a cellulose nanofiber-containing resin composition, to a resin composition, and to a molded article thereof.

### BACKGROUND ART

Cellulose nanofiber (CNF) is a nanoscale material the main part of which is cellulose, which is the basic structure of a plant cell. Cellulose nanofiber is a plant-derived sustainable resource, moreover has excellent strength, and thus, is increasingly utilized as a fiber-reinforcing material that gives a smaller environmental burden. Examples in which cellulose nanofiber is used as a fiber-reinforcing material include a cellulose nanofiber-containing resin composition disclosed in the following Patent Document 1.

### RELATED ART DOCUMENT

### PATENT DOCUMENT

[Patent Document 1] JP6360954B1

### SUMMARY OF THE INVENTION

### PROBLEMS TO BE SOLVED BY THE INVENTION

However, the cellulose nanofiber-containing resin composition described in Patent Document 1 has room for further improvement in terms of mechanical characteristics or color tone.

In view of this, an object of the present invention is to provide an additive composition capable of improving the mechanical characteristics and color tone of a cellulose nanofiber-containing resin composition, and to provide a resin composition and a molded article thereof.

### MEANS FOR SOLVING THE PROBLEMS

The present inventors have made studies vigorously to solve the above-mentioned problems, and have consequently come to complete the present invention through the discovery that an additive composition containing a cellulose nanofiber and a nucleating agent makes it possible to solve the problems.

That is, an additive composition according to the present invention is characterized by containing (A) a cellulose nanofiber and (D) a nucleating agent.

In the additive composition according to the present invention, (D) the nucleating agent preferably contains an aromatic phosphate metal salt represented by the following general formula (1):

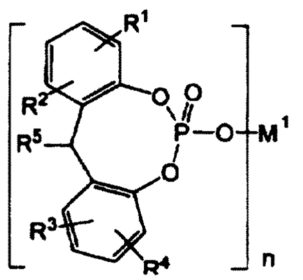

(1)

where $R^1$ to $R^5$ independently represent a hydrogen atom or a linear or branched $C_{1-6}$ alkyl group; n represents 1 or 2; when n is 1, $M^1$ represents an alkali metal or dihydroxyaluminum; and, when n is 2, $M^1$ represents an alkaline earth metal, zinc, or hydroxyaluminum. In addition, the additive composition according to the present invention preferably further contains (B) an alcohol compound. Furthermore, the additive composition according to the present invention preferably further contains (C) an antioxidant, and (C) the antioxidant more preferably contains at least one selected

from the group consisting of phenol antioxidants and phosphorus antioxidants.

In addition, a resin composition according to the present invention is characterized by containing (A) a cellulose nanofiber, (D) a nucleating agent, and (E) a synthetic resin.

Furthermore, a molded article according to the present invention is characterized by being obtained by molding the resin composition according to the present invention.

EFFECTS OF THE INVENTION

The present invention makes it possible to provide an additive composition capable of improving the mechanical characteristics and color tone of a cellulose nanofiber-containing resin composition, and to provide a resin composition and a molded article thereof.

MODE FOR CARRYING OUT THE INVENTION

Embodiments of the present invention will now be described in detail. First, an additive composition according to the present embodiment will be described.

<Additive Composition>

An additive composition according to the present embodiment contains (A) a cellulose nanofiber and (D) a nucleating agent.

The additive composition according to the present embodiment makes it possible to improve the mechanical characteristics and color tone of a cellulose nanofiber-containing resin composition.

[(A) Cellulose Nanofiber]

(A) the cellulose nanofiber is a nanoscale material the main part of which is cellulose, which is the basic structure of a plant. The cellulose nanofiber is generally an extremely thin fibrous substance having an average fiber width of 1 nm to hundreds of nanometers and a length of hundreds of nanometers to tens of micrometers. (A) the cellulose nanofiber can be obtained, for example, by defiberizing a cellulose material mechanically or defiberizing part of a cellulose material by chemical treatment.

Examples of cellulose materials include cellulose fibers derived from plant materials (for example, wood, bamboo, cannabis, jute, kenaf, farmland waste, cloth, pulps (needle-leaf unbleached kraft pulp (NUKP), needle-leaf bleached kraft pulp (NBKP), leaf unbleached kraft pulp (LUKP), leaf bleached kraft pulp (LBKP), needle-leaf unbleached sulfite pulp (NUSP), needle-leaf bleached sulfite pulp (NBSP), thermomechanical pulp (TMP), and regenerated pulp), waste paper, or the like), animal materials (for example, sea squirts), seaweeds, microorganisms (for example, acetic acid bacteria (Acetobacter)), microorganism products, and the like. Among these, plant-derived cellulose fibers are preferable as raw materials for (A) the cellulose nanofiber contained in the additive composition according to the present embodiment.

> (A) the cellulose nanofiber contained in the additive composition according to the present embodiment may be a cellulose nanofiber obtained by defiberizing a cellulose material that has undergone a chemical treatment (cationization, carboxylation (oxidation), carboxymethylation, anionization such as esterification, or functional group introduction).

An apparatus used to defiberize a cellulose material can be, but not limited particularly to, an apparatus such as a high-speed rotation type, colloid mill type, high-pressure type, roll mill type, or ultrasonic type. The defiberization is preferably a physical defiberization treatment that makes it possible to apply a strong shearing force to a water dispersion of a cellulose material. Before the defiberization treatment, the water dispersion can be preliminarily treated using an apparatus for mixing, stirring, emulsification, or dispersion.

The average fiber diameter of (A) the cellulose nanofiber contained in the additive composition according to the present embodiment is preferably 2 to 500 nm, more preferably 2 to 50 nm, as the length weighted average fiber diameter. In addition, the average fiber length of (A) the cellulose nanofiber contained in the additive composition according to the present embodiment is preferably 50 to 2000 nm, more preferably 100 to 1000 nm, as the length weighted average fiber length. In this regard, the length weighted average fiber diameter and the length weighted average fiber length can be determined by observing each fiber using an atomic force microscope (AFM) or a transmission electron microscope (TEM).

The average aspect ratio of (A) the cellulose nanofiber contained in the additive composition according to the present embodiment is preferably 10 or more, more preferably 50 or more. The upper limit of the average aspect ratio

of (A) the cellulose nanofiber can be, for example, but is not limited particularly to, 1000 or less. The average aspect ratio of (A) the cellulose nanofiber can be calculated in accordance with the following mathematical expression:

$$\text{Average aspect ratio} = \text{average fiber length/average fiber diameter.}$$

The additive composition according to the present embodiment may contain a dispersion medium for the purpose of dispersing (A) the cellulose nanofiber uniformly. In cases where (A) the cellulose nanofiber is not hydrophobized, the dispersion medium preferably contains a hydrophilic substance or water as a main component. The hydrophilic substance is preferably a polar substance that does not dissolve a synthetic resin. Examples of hydrophilic substances include methanol, ethanol, isopropyl alcohol, acetone, and the like. These may be used singly or may be used in combination of two or more kinds thereof. Here, the water may be any one of city water, industrial water, distilled water, purified water, or the like.

[(D) Nucleating Agent]

(D) the nucleating agent is an additive that promotes the crystallization of a crystalline resin. Examples of (D) the nucleating agent contained in the additive composition according to the present embodiment include nucleating agents for polyolefin resins, nucleating agents for polyamide resins, nucleating agents for polyester resins, nucleating agents for polyacetal, nucleating agents for polylactic acids, nucleating agents for polyphenylene sulfide, and the like. Among these, nucleating agents for polyolefin resins are particularly preferable. Specific examples of nucleating agents for polyolefin resins include: an aromatic phosphate metal salt represented by the following general formula (1); alicyclic dicarboxylate metal salts such as calcium cyclohexane-1,2-dicarboxylate, disodium cyclohexane-1,2-dicarboxylate, calcium bicyclo[2.2.1]heptane-2,3-dicarboxylate, and disodium bicyclo[2.2.1]heptane-2,3-dicarboxylate; aromatic carboxylate metal salts such as sodium benzoate and *4-tert*-butylbenzoic acid aluminum; aliphatic carboxylate metal salts such as sodium adipate; alditol compounds such as dibenzylidene sorbitol, bis(methylbenzylidene)sorbitol, bis(3,4-dimethylbenzylidene)sorbitol, bis(*p*-ethylbenzylidene)sorbitol, bis(dimethylbenzylidene)sorbitol, and 1,2,3-trideoxy-4,6:5,7-*o*-bis(4-propylbenzylidene)nonitol; amide compounds such as *N,N',N''*-tris[2-methylcyclohexyl]-1,2,3-propanetricarboxamide, *N,N',N''*-tricyclohexyl-1,3,5-benzenetricarboxamide, *N,N'*-dicyclohexylnaphthalenedicarboxamide, and 1,3,5-tri(dimethylisopropoylamino)benzene; inorganic nucleating agents such as talc; and the like. These may be contained singly or may be contained in combination of two or more kinds thereof.

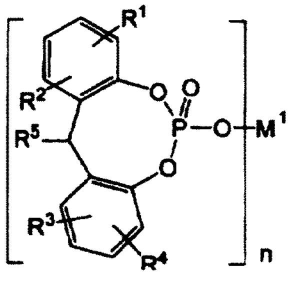

(1)

In the general formula (1), $R^1$ to $R^5$ independently represent a hydrogen atom or a linear or branched $C_{1-6}$ alkyl group; n represents 1 or 2; when n is 1, $M^1$ represents an alkali metal or dihydroxyaluminum; and, when n is 2, $M^1$ represents an alkaline earth metal, zinc, or hydroxy aluminum.

Examples of $C_{1-6}$ alkyl groups represented by $R^1$ to $R^5$ in the general formula (1) include a methyl group, ethyl group, *n*-propyl group, isopropyl group, cyclopropyl group, *n*-butyl group, *sec*-butyl group, *tert*-butyl group, isobutyl group, cyclobutyl group, *n*-amyl group, *tert*-amyl group, cyclopentyl group, *n*-hexyl group, cyclohexyl group, and the like. In terms of further enhancing the mechanical characteristics of the cellulose nanofiber-containing resin composition, $R^1$ to $R^4$ are particularly preferably *tert*-butyl groups. In the same terms, $R^5$ is preferably a hydrogen atom or a methyl group, particularly preferably a hydrogen atom.

In cases where $M^1$ represents an alkali metal, examples of alkali metals include lithium, sodium, potassium, and the like. Among these, lithium and sodium are preferable, and sodium is particularly preferable. In cases where $M^1$ represents an alkaline earth metal, examples of alkaline earth metals include magnesium, calcium, barium, and the like.

In terms of further increasing the mechanical characteristics of the cellulose nanofiber-containing resin composition, n is preferably 1.

Specific examples of aromatic phosphate metal salts represented by the general formula (1) include the below-mentioned salts. These may be contained singly or may be contained in combination of two or more kinds thereof.

However, an aromatic phosphate metal salt represented by the general formula (1) is not limited to these.

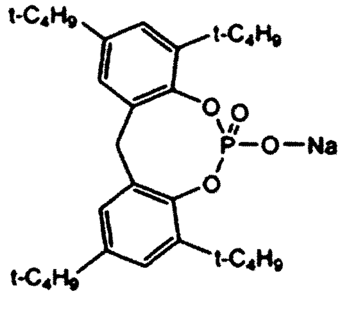

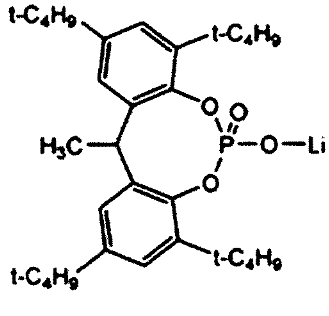

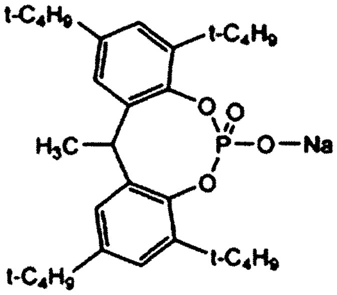

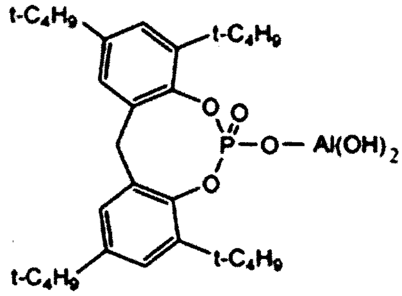

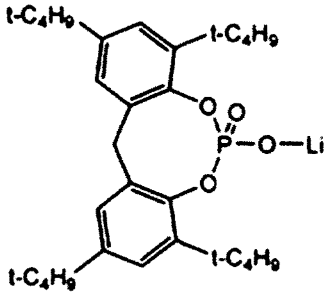

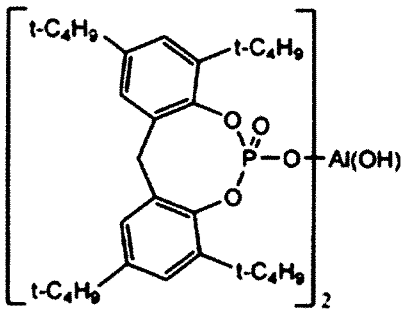

In terms of further improving the mechanical characteristics and color tone of the cellulose nanofiber-containing resin composition, a nucleating agent for polyolefin resins preferably contains an $\alpha$-crystal nucleating agent that promotes the $\alpha$-crystal formation of a polyolefin resin. In the same terms, the nucleating agent for polyolefin resins preferably contains at least one selected from the group consisting of an aromatic phosphate metal salt represented by the general formula (1), alicyclic dicarboxylate metal salt, aromatic carboxylate metal salt, and aliphatic carboxylate metal salt.

In terms of further improving the mechanical characteristics and color tone of the cellulose nanofiber-containing resin composition, (D) the nucleating agent in the additive composition according to the present embodiment preferably contains an aromatic phosphate metal salt represented by the general formula (1).

In the additive composition according to the present embodiment, the amount of (D) the nucleating agent can be, for example, but is not limited particularly to, 0.01 to 100 parts by mass with respect to 100 parts by mass of (A) the cellulose nanofiber. In terms of further improving the mechanical characteristics and color tone of the cellulose nanofiber-containing resin composition, the amount of (D) the nucleating agent is preferably 0.1 parts by mass or more, more preferably 0.5 parts by mass or more, with respect to 100 parts by mass of (A) the cellulose nanofiber. In the same terms, the amount of (D) the nucleating agent is preferably 50 parts by mass or less, more preferably 30 parts by mass or less, still more preferably 10 parts by mass or less, with respect to 100 parts by mass of (A) the cellulose nanofiber.

[(B) Alcohol Compound]

The additive composition according to the present embodiment preferably further contains (B) an alcohol compound. In this case, the color tone of the cellulose nanofiber-containing resin composition can be further improved. Examples of (B) the alcohol compound include linear or branched $C_{10-30}$ monohydric alcohols, linear or branched $C_{10-30}$ polyhydric alcohols, diols having a cyclic acetal, tris(2-hydroxyalkyl)isocyanurate, alcohols represented by the following general formulae (2) to (5), and the like. These may be used singly or in combination of two or more kinds thereof.

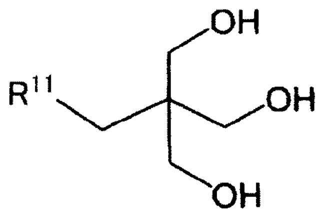

(2)

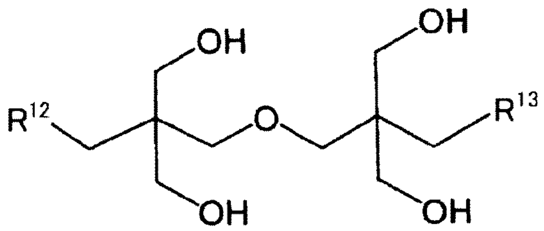

(3)

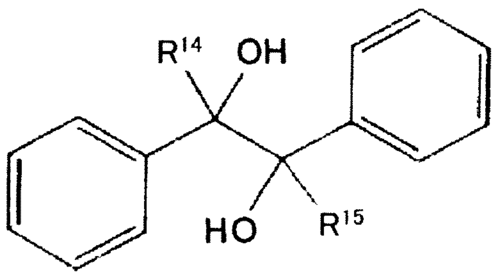

(4)

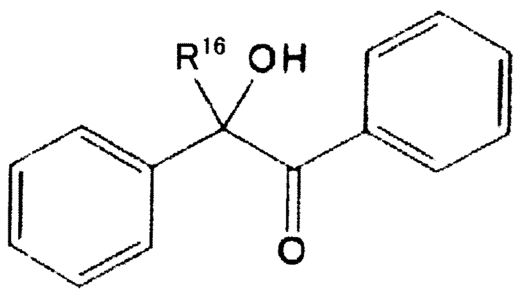

(5)

In the general formula (2) and the general formula (3), $R^{11}$, $R^{12}$, and $R^{13}$ represent a hydrogen atom, a hydroxyl group, or a linear or branched $C_{1-6}$ alkyl group. In the general formula (4) and the general formula (5), $R^{14}$, $R^{15}$, and $R^{16}$ independently represent a hydrogen atom or a linear or branched $C_{1-6}$ alkyl group. Here, at least one of the hydrogen atoms bound in a phenyl group in the general formula (4) and the general formula (5) may be substituted with a halogen atom, a hydroxyl group, a linear or branched $C_{1-6}$ alkyl group, or a linear or branched $C_{1-6}$ alkoxy group.

Specific examples of linear or branched $C_{10-30}$ monohydric alcohols include 1-decanol, lauryl alcohol, myristyl alcohol, palmityl alcohol, stearyl alcohol, arachidyl alcohol, behenyl alcohol, lignoceryl alcohol, myricyl alcohol, and the like. Among these, lauryl alcohol, myristyl alcohol, palmityl alcohol, stearyl alcohol, arachidyl alcohol, and behenyl alcohol are preferable. Myristyl alcohol, palmityl alcohol, stearyl alcohol, and arachidyl alcohol are still more preferable. Stearyl alcohol is particularly preferable.

Specific examples of linear or branched $C_{10-30}$ polyhydric alcohols include 1,2-decanediol, 1,10-decanediol, 1,2-dodecanediol, 1,12-dodecanediol, 1,2-tetradecanediol, 1,14-tetradecanediol, 1,2-hexadecanediol, 1,16-hexadecanediol, 1,2-octadecanediol, 1,18-octadecanediol, 1,2-eicosanediol, 1,20-eicosanediol, 1,2-tetracosanediol, 1,24-tetracosanediol, 1,2-triacontanediol, 1,30-triacontanediol, and the like. Among these, 1,2-decanediol, 1,10-decanediol, 1,2-dodecanediol, 1,12-dodecanediol, 1,2-tetradecanediol, 1,14-tetradecanediol, 1,2-hexadecanediol, 1,16-hexadecanediol, 1,2-octadecanediol, and 1,18-octadecanediol are preferable; 1,2-decanediol, 1,2-dodecanediol, 1,2-tetradecanediol, 1,2-hexadecanediol, and 1,2-octadecanediol are more preferable; 1,2-decanediol, 1,2-dodecanediol, and 1,2-tetradecanediol are still more preferable; and 1,2-dodecanediol is particularly preferable.

Specific examples of diols having a cyclic acetal include 2-(5-ethyl-5-hydroxymethyl-1,3-dioxane-2-yl)-2-methylpropane-1-ol, 3,9-bis(2-hydroxy-1,1-dimethylethyl)-2,4,8,10-tetraoxaspiro[5,5]undecane (the common name: spiroglycol), 3,9-diethanol-2,4,8,10-tetraoxaspiro[5,5]undecane, and the like. Among these, spiroglycol is particularly preferable.

Specific examples of tris(2-hydroxyalkyl)isocyanurate include (2-hydroxymethyl)isocyanurate, tris(2-hydroxyethyl)isocyanurate, tris(2-hydroxypropyl)isocyanurate, and the like. Among these, tris(2-hydroxyethyl)isocyanurate is particularly preferable in terms of further improving the heat resistance of the cellulose nanofiber-containing resin composition.

As above-mentioned, $R^{11}$ in the general formula (2) represents a hydrogen atom, a hydroxyl group, or a linear or branched $C_{1-6}$ alkyl group. Examples of linear or branched $C_{1-6}$ alkyl groups include: linear alkyl groups such as a methyl group, ethyl group, *n*-propyl group, *n*-butyl group, *n*-amyl group, and *n*-hexyl group; branched alkyl groups such as an isopropyl group, isobutyl group, sec-butyl group, *tert*-butyl group, isoamyl group, *tert*-amyl group, isohexyl group, and *tert*-hexyl group; and the like. In terms of further improving the heat resistance of the cellulose nanofiber-containing resin composition, $R^{11}$ is preferably a hydrogen atom, a hydroxyl group, or a methyl group, more preferably a hydroxyl group or methyl group, particularly preferably a hydroxyl group.

Specific examples of compounds represented by the general formula (2) include trimethylolethane, trimethylolpropane, trimethylolbutane, trimethylolpentane, trimethylolhexane, trimethylolheptane, trimethyloloctane, pentaerythritol, and the like. Among these, trimethylolethane, trimethylolpropane, and pentaerythritol are preferable in terms of further improving the heat resistance of the cellulose nanofiber-containing resin composition. Trimethylolpropane and pentaerythritol are more preferable. Pentaerythritol is particularly preferable.

As above-mentioned, $R^{12}$ and $R^{13}$ in the general formula (3) independently represent a hydrogen atom, a hydroxyl group, or a linear or branched $C_{1-6}$ alkyl group. Examples of linear or branched $C_{1-6}$ alkyl groups include the same groups as a linear or branched $C_{1-6}$ alkyl group represented by $R^{11}$.

Specific examples of compounds represented by the general formula (3) include ditrimethylolethane, ditrimethylolpropane, ditrimethylolbutane, ditrimethylolpentane, ditrimethylolhexane, ditrimethylolheptane, ditrimethyloloctane, dipentaerythritol, and the like. Among these, ditrimethylolethane, ditrimethylolpropane, and dipentaerythritol are preferable in terms of further improving the heat resistance of the cellulose nanofiber-containing resin composition. Ditrimethylolpropane and dipentaerythritol are more preferable. Dipentaerythritol is particularly preferable.

As above-mentioned, $R^{14}$, $R^{15}$, and $R^{16}$ in the general formula (4) and the general formula (5) independently represent a hydrogen atom or a linear or branched $C_{1-6}$ alkyl group. Examples of linear or branched $C_{1-6}$ alkyl groups represented by $R^{14}$, $R^{15}$, and $R^{16}$ include the same groups as the linear or branched $C_{1-6}$ alkyl groups represented by $R^{11}$.

As above-mentioned, at least one of the hydrogen atoms bound in a phenyl group in the general formula (4) and the general formula (5) may be substituted with a halogen atom, a hydroxyl group, a linear or branched $C_{1-6}$ alkyl group, or a linear or branched $C_{1-6}$ alkoxy group. Here, examples of halogen atoms include a fluorine atom, chlorine atom, bromine atom, iodine atom, and the like. In addition, examples of linear or branched $C_{1-6}$ alkyl groups include the same groups as a linear or branched $C_{1-6}$ alkyl group represented by $R^{11}$. Furthermore, examples of $C_{1-6}$ alkoxy groups include: linear alkoxy groups such as a methoxy group, ethoxy group, *n*-propoxy group, *n*-butoxy group, *n*-amyloxy group, and *n*-hexyloxy group; branched alkoxy groups such as an isopropoxy group, isobutoxy group, *sec*-butoxy group, *tert*-butoxy group, isoamyloxy group, *tert*-amyloxy group, isohexyloxy group, and *tert*-hexyloxy group; cyclic alkoxy groups such as a cyclopropoxy group, cyclobutoxy group, cyclopentyloxy group, and cyclohexyloxy group; and the like.

In terms of further improving the color tone of a molded article composed of the cellulose nanofiber-containing resin composition, $R^{14}$, $R^{15}$, and $R^{16}$ are all preferably hydrogen atoms. In the same terms, a phenyl group in the general formula (4) and the general formula (5) is preferably an unsubstituted phenyl group, a phenyl group in which at least one hydrogen atom is substituted with a linear or branched $C_{1-6}$ alkyl group, or a phenyl group in which at least one hydrogen atom is substituted with a linear or branched $C_{1-6}$ alkoxy group.

Specific examples of compounds represented by the general formula (4) include: hydrobenzoin compounds such as 1,2-diphenyl-1,2-ethanediol (hydrobenzoin), 1,2-diphenyl-1-methyl-1,2-ethanediol, 1,2-diphenyl-1-ethyl-1,2-ethanediol, 1,2-dimethyl-1,2-diphenyl-1,2-ethanediol, 1,2-diethyl-1,2-diphenyl-1,2-ethanediol, 1,2-bis(4-methylphenyl)-1,2-ethanediol, 1,2-bis(4-ethylphenyl)-1,2-ethanediol, 1,2-bis(4-methoxyphenyl)-1,2-ethanediol, and 1,2-bis(4-ethoxyphenyl)-1,2-ethanediol; and the like. Among these, hydrobenzoins, 1,2-bis(4-methylphenyl)-1,2-ethanediol, and 1,2-bis(4-methoxyphenyl)-1,2-ethanediol are preferable in terms of further improving the color tone of a molded article composed of the cellulose nanofiber-containing resin composition. Hydrobenzoins are particularly preferable.

Specific examples of compounds represented by the general formula (5) include: benzoin compounds such as 2-hydroxy-2-phenylacetophenone (benzoin), 2-hydroxy-2-methyl-2-phenylacetophenone (methylbenzoin), 2-ethyl-2-hydroxy-2-phenylacetophenone (ethylbenzoin), 4,4'-dimethylbenzoin, 4,4'-diethylbenzoin, 4,4'-dimethoxybenzoin, and 4,4'-diethoxybenzoin; and the like. Among these, benzoins, 4,4'-dimethylbenzoin, and 4,4'-dimethoxybenzoin are preferable in terms of further improving the color tone of a molded article composed of the cellulose nanofiber-containing resin composition. Benzoins are particularly preferable.

Examples of alcohol compounds other than the linear or branched $C_{10-30}$ monohydric alcohols, linear or branched $C_{10-30}$ polyhydric alcohols, diols having a cyclic acetal, tris(2-hydroxyalkyl)isocyanurate, and compounds represented by the general formulae (2) to (5) include: $C_{1-9}$ linear aliphatic alcohols such as butyl alcohol, pentanol, hexanol,

1,4-butanediol, and 1,3-butanediol; branched $C_{1-9}$ aliphatic alcohols such as isobutyl alcohol and neopentyl alcohol; aliphatic alcohols interrupted with an ether bond such as ethoxyethanol, butoxyethanol, 1-methylpropoxyethanol, 2-methylbutoxyethanol, butoxypropanol (n-BP), and butoxypropoxypropanol (n-BPP); aliphatic polyols having an alicyclic group, such as cyclodextrin, cyclobutanediol, cyclopentanediol, cyclohexanediol, cycloheptanediol, cyclooctanediol, cyclohexanedimethanol, tricyclohexanedimethanol, tricyclodecanedimethanol, hydroxypropylcyclohexanol, tricyclo[5,2,1,0,2,6] decanedimethanol, bicyclo[4,3,0]-nonanediol, dicyclohexanediol, tricyclo[5,3,1,1] dodecanediol, bicyclo[4,3,0]nonanedimethanol, tricyclo[5,3,1,1]dodecane-diethanol, hydroxypropyltricyclo[5,3,1,1]dodecanol, spiro[3,4]octanediol, butylcyclohexanediol, 1,1'-bicyclohexylidenediol, cyclohexanetriol, 4,4'-isopropylidene-biscyclohexanol, 4,4'-oxybiscyclohexanol, 4,4'-thiobiscyclohexanol, and bis(4-hydroxycyclohexanol)methane; pentaerythritol condensates other than compounds represented by the general formula (2) or (3) such as tripentaerythritol and tetrapentaerythritol; sugar alcohols other than compounds represented by the general formula (2) or (3) such as erythritol, isomalt, lactitol, maltitol, mannitol, sorbitol, xylitol, and sucrose; aromatic alcohols other than compounds represented by the general formula (4) or (5) such as benzyl alcohol, phenethyl alcohol, 2-ethylbenzyl alcohol, methoxyphenyl methanol, 1-(4-hydroxyphenyl)pentadecane-1,3-dione, cyclohexanediethanol dihydroxybenzene, benzenetriol, hydroxybenzyl alcohol, and dihydroxytoluene; and the like.

In the additive composition according to the present embodiment, (B) the alcohol compound preferably contains at least one selected from the group consisting of tris(2-hydroxyalkyl)isocyanurate and compounds represented by the general formulae (2) to (5), more preferably contains at least one selected from the group consisting of tris(2-hydroxyalkyl)isocyanurate, compounds represented by the general formula (2), and compounds represented by the general formula (3).

The amount of (B) the alcohol compound can be, for example, 0.01 to 100 parts by mass with respect to 100 parts by mass of (A) the cellulose nanofiber. In terms of further improving the heat resistance of the cellulose nanofiber-containing resin composition, the amount of (B) the alcohol compound is preferably 0.1 parts by mass or more, more preferably 1 part by mass or more, still more preferably 5 parts by mass or more, still more preferably 10 parts by mass or more, particularly preferably 15 parts by mass or more, with respect to 100 parts by mass of (A) the cellulose nanofiber. In the same terms, the amount of (B) the alcohol compound is preferably 80 parts by mass or less, more preferably 60 parts by mass or less, still more preferably 50 parts by mass or less, with respect to 100 parts by mass of (A) the cellulose nanofiber.

[(C) Antioxidant]

The additive composition according to the present embodiment preferably further contains (C) an antioxidant. In this case, the heat resistance of the cellulose nanofiber-containing resin composition can be further improved. Examples of (C) the antioxidant include phenol antioxidants, phosphorus antioxidants, sulfur-based antioxidants, other antioxidants, and the like. These may be contained singly or may be contained in combination of two or more kinds thereof.

Examples of phenol antioxidants include, 2,6-di-tert-butyl-4-ethylphenol, 2-tert-butyl-4,6-dimethylphenol, styrenated phenol, 2,2'-methylenebis(4-ethyl-6-tert-butylphenol), 2,2'-thiobis-(6-*tert*-butyl-4-methylphenol), 2,2'-thiodiethylenebis[3-(3,5-di-*tert*-butyl-4-hydroxyphenyl)propionate], 2-methyl-4,6-bis(octylsulfanilmethyl)phenol, 2,2'-isobutylidenebis(4,6-dimethylphenol), isooctyl-3-(3,5-di-*tert*-butyl-4-hydroxyphenyl)propionate, *N*,*N*'-hexane-1,6-diylbis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylenebis(4,6-di-*tert*-butylphenol), an ester of 3,5-di-*tert*-butyl-4-hydroxybenzenepropanoic acid and a $C_{13-15}$ alkyl, 2,5-di-*tert*-amylhydroquinone, a hindered phenol polymer (the tradename "AO.OH.98", manufactured by ADEKA POLYMER ADDITIVES EUROPE SAS), 2,2'-methylenebis[6-(1-methylcyclohexyl)-*p*-cresol], *2-tert*-butyl-6-(3-*tert*-butyl-2-hydroxy5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-*tert*-butylbenz[d,f][1,3,2]-dioxaphosphepin, hexamethylenebis[3-(3,5-di-*tert*-butyl-4-hydroxyphenyl)propionate], bis[monoethyl(3,5-di-*tert*-butyl-4-hydroxybenzyl)phosphonate] calcium salt, a reaction product of 5,7-bis(1,1-dimethylethyl)-3-hydroxy-2(3H)-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis($\alpha$-methylbenzyl)-4-methylphenol, bis[3,3-bis-(4'-hydroxy-3'-*tert*-butyl-phenyl)butanoic acid] glycol ester, 2,6-di-*tert*-butyl-p-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-*tert*-butyl-4-hydroxybenzyl thioacetate, thiodiethylenebis[(3,5-di-*tert*-butyl-4-hydroxyphenyl)propionate], 4,4'-thiobis(6-*tert*-butyl-m-cresol), 2-octylthio-4,6-di(3,5-di-*tert*-butyl-4-hydroxy phenoxy)-*s*-triazine, 2,2'-methylenebis(4-methyl-6-*tert*-butylphenol), bis[3,3-bis(4-hydroxy-3-*tert*-butylphenyl)butyric acid]glycol ester, 4,4'-butylidenebis(2,6-di-*tert*-butylphenol), 4,4'-butylidenebis(6-*tert*-butyl-3-methylphenol), 2,2'-ethylidenebis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-tert-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-*tert*-butyl-4'-hydroxyphenyl)propionate]methane, 2-*tert*-butyl-4-methyl-6-(2-acryloyloxy-3-tert-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, triethylene glycol bis[β-(3-*tert*-butyl-4-hydroxy-5-methylphenyl)propionate], 3-(3,5-di alkyl-4-hydroxyphenyl)propionic acid derivatives such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide, and lauryl-3-(3,5-di-*tert*-butyl-4-hydroxyphenyl)propionic acid amide, and the like.

Examples of phosphorus antioxidants include triphenyl phosphite, diisooctyl phosphite, heptakis(dipropylene glycol)triphosphite, triisodecyl phosphite, diphenylisooctyl phosphite, diisooctylphenyl phosphite, diphenyltridecyl phosphite, triisooctyl phosphite, trilauryl phosphite, diphenyl phosphite, tris(dipropylene glycol)phosphite, dioleylhydrogen phosphite, trilauryltrithio phosphite, bis(tridecyl)phosphite, tris(isodecyl)phosphite, tris(tridecyl)phosphite, diphenyldecyl phosphite, dinonylphenylbis(nonylphenyl)phosphite, poly(dipropylene glycol)phenyl phosphite, tetraphenyl dipropylene glycol diphosphite, trisnonylphenyl phosphite, tris(2,4-di-*tert*-butylphenyl)phosphite, tris(2,4-di-*tert*-butyl-5-methylphenyl)phosphite, tris[2-tert-butyl-4-(3-*tert*-butyl-4-hydroxy-5-methylphenylthio)-5-methylphenyl]phosphite, tri(decyl)phosphite, octyldiphenyl phosphite, di(decyl)monophenyl phosphite, a mixture of distearylpentaerythritol and calcium stearate, alkyl($C_{10}$)bis phenol A phosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-n-butylidene bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylenediphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecyl phosphite, 2,2'-methylenebis(4,6-di-*tert*-butylphenyl)-2-ethylhexyl phosphite, 2,2'-methylenebis(4,6-di-*tert*-butylphenyl)-octadecyl phosphite, 2,2'-ethylidenebis(4,6-di-*tert*-butylphenyl)fluorophosphite, 4,4'-butylidenebis(3-methyl-6-*tert*-butylphenylditridecyl)phosphite, tris(2-[(2,4,8,10-tetrakis-*tert*-butyldibenzo[d,f][1,3,2]dioxaphosphepin-6-yl)oxy]ethyl)amine, 3,9-bis(4-nonylphenoxy)-2,4,8,10-tetraoxa-3,9-diphosphespiro[5,5]undecane, 2,4,6-tri-*tert*-butylphenyl-2-butyl-2-ethyl-1,3-propanediol phosphite, poly4,4'-isopropylidenediphenol $C_{12-15}$ alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-*tert*-butyl-4-methylphenyl)pentaerythritol diphosphite, bis(2,4-dicumylphenyl)pentaerythritol diphosphite, and the like.

Examples of sulfur antioxidants include tetrakis[methylene-3-(laurylthio)propionate]methane, bis(methyl-4-[3-*n*-alkyl($C_{12}$/$C_{14}$)thiopropionyloxy]5-*tert*-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearylthiodipropionate, 4,4'-thiobis(6-*tert*-butyl-m-cresol), 2,2'-thiobis(6-*tert*-butyl-*p*-cresol), distearyl-disulfide, and the like.

Examples of other antioxidants include: nitrone compounds such as *N*-benzyl-α-phenylnitrone, *N*-ethyl-α-methylnitrone, *N*-octyl-α-heptylnitrone, *N*-lauryl-α-undecylnitrone, *N*-tetradecyl-α-tridecylnitrone, *N*-hexadecyl-α-pentadecylnitrone, *N*-octyl-α-heptadecylnitrone, *N*-hexadecyl-α-heptadecylnitrone, *N*-octadecyl-α-pentadecylnitrone, *N*-heptadecyl-α-heptadecylnitrone, and *N*-octadecyl-α-heptadecylnitrone; benzofuran compounds such as 3-arylbenzofuran-2(3H)-one, 3-(alkoxyphenyl)benzofuran-2-one, 3-(acyloxyphenyl)benzofuran-2(3H)-one, 5,7-di-*tert*-butyl-3-(3,4-dimethylphenyl)-benzofuran-2(3H)-one, 5,7-di-*tert*-butyl-3-(4-hydroxyphenyl)-benzofuran-2(3H)-one, 5,7-di-*tert*-butyl-3-{ 4-(2-hydroxy ethoxy)phenyl}-benzofuran-2(3H)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxa pentadecyl)oxy)phenyl)benzofuran-2(3H)one; and the like.

In cases where the additive composition according to the present embodiment contains (C) an antioxidant, (C) the antioxidant preferably contains at least one selected from the group consisting of phenol antioxidants and phosphorus antioxidants in terms of further improving the heat resistance of the cellulose nanofiber-containing resin composition.

In cases where the additive composition according to the present embodiment contains (C) the antioxidant, the amount of (C) the antioxidant can be, for example, 0.01 to 100 parts by mass with respect to 100 parts by mass of (A) the cellulose nanofiber. In terms of further improving the heat resistance of the cellulose nanofiber-containing resin composition, the amount of (C) the antioxidant is preferably 0.1 parts by mass or more, more preferably 0.5 parts by mass or more, with respect to 100 parts by mass of (A) the cellulose nanofiber. In the same terms, the amount of (C) the antioxidant is preferably 50 parts by mass or less, more preferably 30 parts by mass or less, still more preferably 10 parts by mass or less, with respect to 100 parts by mass of (A) the cellulose nanofiber.

If desired, the additive composition according to the present embodiment may further contain an additive such as a hindered amine compound, ultraviolet absorber, fatty acid metal salt, flame retardant, flame retardant auxiliary, lubricant, filler, hydrotalcite, antistatic agent, fluorescent whitener, pigment, or dye (hereinafter referred to as "another additive").

Examples of hindered amine compounds include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)-di(tridecyl)-1,2,3,4-butane tetracarboxylate, bis(1,2,2,6,6-pentamethyl-4-piperidyl)-di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl) malonate, 1-(2-hydroxy ethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraaza dodecane, 1,5,8,12-tetrakis[2,4-bis(*N*-butyl-*N*-(1,2,2,6,6-pentamethyl-4-piperidyl)amino)-s-triazine-6-yl]-1,5,8-12-tetraaza dodecane, 1,6,11-tris[2,4-bis(*N*-butyl-*N* (2,2,6,6-tetramethyl-4-piperidyl)amino)-s-triazine-6-ylamino]undecane, 1,6,11-tris[2,4-bis(*N*-butyl-*N*-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidine-4-yl)carbonate, 2,2,6,6-tetramethyl-4-piperidylhexadecanoate, 2,2,6,6-tetramethyl-4-piperidyloctadecanoate, and the like.

Examples of ultraviolet absorbers include: 2-hydroxybenzophenones such as 2,4-dihydroxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylenebis(4-*tert*-octyl-6-benzotriazolylphenol), polyethylene glycol ester of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octyl phenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3 ,5-di -tert-butyl-4-hydroxy)benzoate, and behenyl(3,5-di-*tert*-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-(β,β-diphenyl acrylate, and methyl-2-cyano-3-methyl-3-(p-methoxyphenyl)acrylate; triazines such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecanedioate; various metal salts or metal chelates, particularly a salt or chelate of nickel or chromium; and the like.

Examples of fatty acid metal salts include: metal salts of a $C_{12-30}$ fatty acid containing a linear or branched fatty-acid residue; and the like. Examples of a metal ion constituting a fatty acid metal salt include a sodium ion, potassium ion, lithium ion, dihydroxyaluminum ion, calcium ion, zinc ion, barium ion, magnesium ion, hydroxyaluminum ion, and the like. Among these, a sodium ion, potassium ion, lithium ion, and calcium ion are preferable. Examples of a fatty acid constituting a fatty acid metal salt include lauric acid, myristic acid, palmitic acid, stearic acid, oleic acid, linoleic acid, linolenic acid, arachidic acid, arachidonic acid, behenic acid, lignoceric acid, cerotinic acid, montanoic acid, melissic acid, and the like. Among these, myristic acid and stearic acid are preferable. The fatty acid constituting a fatty acid metal salt may be a fatty acid in which one or more hydrogen atoms of the fatty-acid residue are substituted with a hydroxyl group. Examples of such a fatty acid include 12-hydroxystearic acid, 12-hydroxyoleic acid, and the like.

Examples of flame retardants include: aromatic phosphates such as triphenyl phosphate, tricresyl phosphate, trixylenyl phosphate, cresyl diphenyl phosphate, cresyl-2,6-dixylenyl phosphate, resorcinol bis(diphenyl phosphate), (1-methylethylidene)-4,1-phenylenetetraphenyl diphosphate, 1,3-phenylenetetrakis(2,6-dimethylphenyl) phosphate, and the tradenames "ADEKASTAB FP-500", "ADEKASTAB FP-600", and "ADEKASTAB FP-800" manufactured by ADEKA Corporation; phosphonates such as divinylphenylphosphonate, diallyl phenylphosphonate, and (1-butenyl) phenylphosphonate; phosphinates such as phenyl diphenylphosphinate, methyl diphenylphosphinate, and a 9,10-dihydro-9-oxa-10-phosphaphenanthrene-10-oxide derivative; phosphazene compounds such as bis(2-allylphenoxy)phosphazene and dicresylphosphazene; phosphorus flame retardants such as melamine phosphate, melamine pyrophosphate, melamine polyphosphate, melam polyphosphate, ammonium polyphosphate, piperazine phosphate, piperazine pyrophosphate, piperazine polyphosphate, a phosphorus-containing vinylbenzyl compound, and red phosphorus; metal hydroxides such as magnesium hydroxide and aluminum hydroxide; bromine flame retardants such as a brominated bisphenol A epoxy resin, brominated phenol novolac epoxy resin, hexabromo benzene, pentabromo toluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenylmaleimide, tribromophenyl acrylate, tribromophenyl methacrylate, tetrabromobisphenol A dimethacrylate, pentabromobenzyl acrylate, and brominated styrene; and the like. These flame retardants are preferably used in combination with an anti-dripping agent such as a fluorine resin or a flame retardant auxiliary such as polyhydric alcohol or hydrotalcite.

Examples of lubricants include: saturated fatty acid amides such as stearic acid amide and behenic acid amide; unsaturated fatty acid amides such as oleic acid amide and erucic acid amide; ethylenebisstearic acid amide; butyl stearate; glycerol monostearate; sorbitan monopalmitate; sorbitan monostearate; stearic acid; stearyl alcohol; mannitol; hydrogenated castor oil; and the like.

Examples of fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, fibrous magnesium oxysulfate, and the like. These fillers can be used with a suitably selected particle diameter (a fiber diameter, a fiber length, and an aspect ratio, if the filler is fibrous). Among these fillers, talc is particularly preferably used because talc has an excellent effect of giving stiffness and is easily available. When used, such a filler can be surface-treated, if desired.

The hydrotalcite can be a composite salt compound containing magnesium, aluminum, a hydroxyl group, a carboxyl group, and any water of crystallization, and may be a natural product or a synthetic product. In addition, the hydrotalcite is not limited to any particular crystal structure, particle shape, or particle size. In such a hydrotalcite, at least a part of magnesium or aluminum may be substituted with another metal such as an alkali metal or zinc, or at least a part of the hydroxyl groups and carboxyl groups may be substituted with another anion group. Additionally, in the hydrotalcite, the water of crystallization may be dehydrated, or the surface may be coated with a higher fatty acid such as a stearic acid, a higher fatty acid metal salt such as an oleate alkali metal salt, an organic sulfonate metal salt such as a dodecylbenzenesulfonate alkali metal salt, a higher fatty acid amide, a higher fatty acid ester, wax, or the like.

Examples of antistatic agents include low-molecular-weight antistatic agents including a nonionic, anionic, cationic, or zwitterionic surfactant or high-molecular-weight antistatic agents including a high-molecular-weight compound. Examples of nonionic surfactants include: polyethylene glycol nonionic surfactants such as higher alcohol ethylene oxide adducts, fatty acid ethylene oxide adducts, higher alkyl amine ethylene oxide adducts, and polyolefin glycol ethylene oxide adducts; polyhydric alcohol nonionic surfactants such as polyethylene oxide, fatty acid esters of glycerin, fatty acid esters of pentaerythrit, fatty acid esters of sorbit or sorbitan, alkyl ethers of polyhydric alcohol, and aliphatic amides of alkanol amine; and the like. Examples of anionic surfactants include: carboxylate salts such as higher fatty acid alkali metal salts; sulfate salts such as higher alcohol sulfate salts and higher alkyl ether sulfate salts; sulfonic acid salts such as alkylbenzene sulfonic acid salts, alkylsulfonic acid salts, and paraffin sulfonic acid salts; phosphate salts such as higher alcohol phosphate salts; and the like. Examples of cationic surfactants include: quaternary ammonium salts such as alkyltrimethyl ammonium salts; and the like. Examples of zwitterionic surfactants include: amino acid zwitterionic surfactants such as higher alkylaminopropionic acid salts; betaine zwitterionic surfactants such as higher alkyldimethylbetaine and higher alkyldihydroxyethylbetaine; and the like. Among these, anionic surfactants are preferable. In particular, sulfonic acid salts such as alkylbenzene sulfonic acid salts, alkylsulfonic acid salts, and paraffin sulfonic acid salts are preferable.

Examples of high-molecular-weight antistatic agents include a block polymer containing an ionomer or a polyethylene glycol as a hydrophilic portion, and the like. Examples of ionomers include ionomers described in JP2010-132927A. Examples of a polymer having a polyethylene glycol as a hydrophilic portion include a polyether ester amide described in JPH07-10989A, a polymer composed of a polyolefin and a polyethylene glycol described in US6552131B1, a polymer composed of a polyester and a polyethylene glycol described in JP2016-023254A, and the like.

A fluorescent whitener is a compound that absorbs the ultraviolet light of sunlight or artificial light, and converts the absorbed light to visible light between violet and blue so that the converted light can radiate, resulting in fluorescence, which promotes the degree of whiteness and blueness of a molded product. Examples of fluorescent whiteners include: a benzoxazole compound, C.I. Fluorescent Brightener 184; a coumarin compound, C.I. Fluorescent Brightener 52; diaminostilbenedisulfonic acid compounds, C.I. Fluorescent Brightener 24, 85, and 71; and the like.

The pigment that can be used is, but not limited particularly to, any commercially available pigment. Specific examples of pigments include: Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Orange 13, 31, 34, 36, 38, 43, 46, 48, 49, 51, 52, 55, 59, 60, 61, 62, 64, 65, and 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Green 7, 10, and 36; Pigment Blue 15, 15:1, 15:2, 15:3, 15:4, 15:5, 15:6, 22, 24, 29, 56, 60, 61, 62, and 64; Pigment Violet 1, 15, 19, 23, 27, 29, 30, 32, 37, 40, and 50; and the like.

Examples of dyes include azo dyes, anthraquinone dyes, indigoid dyes, triarylmethane dyes, xanthene dyes,

alizarin dyes, acridine dyes, stilbene dyes, thiazole dyes, naphthol dyes, quinoline dyes, nitro dyes, indamine dyes, oxazine dyes, phthalocyanine dyes, cyanine dyes, and the like.

Examples of a method of producing the additive composition according to the present embodiment include, but are not limited particularly to, a method in which (A) the cellulose nanofiber, (D) the nucleating agent, and, if desired, (B) the alcohol compound, (C) the antioxidant, and another additive are supplied in combination and then mixed using a mixing apparatus such as an FM mixer, mill roll, Banbury mixer, super mixer, or the like.

The additive composition according to the present embodiment may further contain a granulating auxiliary such as a binder, wax, solvent, or silica to be granulated in the form of a one-pack composite additive. In addition, the additive composition according to the present embodiment may be a masterbatch further containing (E) a synthetic resin. Furthermore, the additive composition according to the present embodiment may be composed of the following: a masterbatch containing at least one component of the above-mentioned components and (E) the synthetic resin; and a component that is among the above-mentioned components and is other than the components contained in the masterbatch.

(E) the synthetic resin contained in the masterbatch may be, but is not limited particularly to, a thermoplastic resin or a thermosetting resin. Examples of thermoplastic resins include: crystalline resins such as polyolefin resins, polyamide resins, polyester resins, polyacetal resins, polylactic acid, and polyphenylene sulfide; noncrystalline resins such as polycarbonate resins, styrene resins, acryl resins, urethane resins, halogen-containing resins, petroleum resins, coumarone resins, polyvinyl alcohol, polyvinyl acetate, and polyphenylene oxide; thermoplastic elastomers; and the like. In addition, examples of thermosetting resins include phenol resins, urea resins, melamine resins, epoxy resins, unsaturated polyester resins, synthetic rubbers, and the like. (E) the synthetic resin may be contained singly or may be contained in combination of two or more kinds thereof. In addition, (E) the synthetic resin may be a copolymer or may be a polymer alloy.

The amount of (E) the synthetic resin contained in the masterbatch can be, for example, 90 mass% or less, or is preferably 80 mass% or less, more preferably 60 mass% or less. In addition, the amount of (E) the synthetic resin contained in the masterbatch can be, for example, 10 mass% or more.

Next, a resin composition according to the present embodiment will be described.

<Resin Composition>

A resin composition according to the present embodiment contains (A) a cellulose nanofiber, (D) a nucleating agent, and (E) a synthetic resin.

A resin composition according to the present embodiment results in having excellent mechanical characteristics and color tone.

[(E) Synthetic Resin]

Examples of (E) the synthetic resin include the same synthetic resin as contained in the above-mentioned masterbatch. In the resin composition according to the present embodiment, (E) the synthetic resin is preferably a thermoplastic resin, still more preferably a crystalline resin. Additionally, in the resin composition according to the present embodiment, (E) the synthetic resin preferably contains a polyolefin resin.

Examples of polyolefin resins include: polyethylene resins such as low-density polyethylene, linear low-density polyethylene, high-density polyethylene, cross-linked polyethylene, and ultrahigh-molecular-weight polyethylene; polypropylene (PP) resins such as homopolypropylene, random copolymer polypropylene, block copolymer polypropylene, impact copolymer polypropylene, high-impact copolymer polypropylene, and maleic anhydride modified polypropylene; $\alpha$-olefin polymers such as polybutene-1, cycloolefin polymer, poly-3-methyl-1-butene, poly-3-methyl-1-pentene, and poly-4-methyl-1-pentene; $\alpha$-olefin copolymers such as ethylene-methyl methacrylate copolymers and ethylene-vinyl acetate copolymers; and the like. Among the polyolefin resins, polypropylene resins are particularly preferable in terms of further improving the heat resistance of the resin composition. The polyolefin resin is selected suitably without being limited particularly to: a molecular weight; the degree of polymerization; a density; a softening point; a ratio of the insoluble components in a solvent; the degree of stereoregularity; the presence of a catalyst residue; the kind and content ratio of a monomer as the raw material; the kind of a catalyst to be used for polymerization (for example, a Ziegler catalyst or a metallocene catalyst); or the like.

In the resin composition according to the present embodiment, (E) the synthetic resin may contain an elastomer. In this case, a molded article composed of the resin composition results in having excellent impact resistance. Here, examples of elastomers include: synthetic rubbers such as an isoprene rubber, butadiene rubber, acrylonitrile-butadiene copolymer rubber, styrene-butadiene copolymer rubber, fluorocarbon rubber, and silicone rubber; thermoplastic elastomers such as a polyolefin thermoplastic elastomer, polystyrene thermoplastic elastomer, polyvinyl chloride thermoplastic elastomer, polyurethane thermoplastic elastomer, polyester thermoplastic elastomer, and polyamide thermoplastic elastomer; and the like. Among these, thermoplastic elastomers are preferable in terms of further improving the

processability of the resin composition and further decreasing the weight of a molded article composed of the resin composition. Among the thermoplastic elastomers, polyolefin thermoplastic elastomers are particularly preferable. In cases where (E) the synthetic resin in the resin composition according to the present embodiment contains an elastomer, the amount of the elastomer can be, for example, 50 mass% or less of all of (E) the synthetic resin, or is preferably 30 mass% or less, more preferably 25 mass% or less. In addition, the amount of the elastomer can be, for example, 5 mass% or more of the whole of (E) the synthetic resin.

Examples of (A) the cellulose nanofiber and (D) the nucleating agent that are contained in the resin composition according to the present embodiment include the same cellulose nanofiber and nucleating agent as contained in the above-mentioned additive composition.

In the resin composition according to the present embodiment, the amount of (A) the cellulose nanofiber can be, for example, but is not limited particularly to, 0.5 to 150 parts by mass with respect to 100 parts by mass of (E) the synthetic resin. In terms of further improving the mechanical characteristics of the resin composition, the amount of (A) the cellulose nanofiber is preferably 1 part by mass or more, more preferably 5 parts by mass or more, with respect to 100 parts by mass of (E) the synthetic resin. In the same terms, the amount of (A) the cellulose nanofiber is preferably 100 parts by mass or less, more preferably 80 parts by mass or less, still more preferably 50 parts by mass or less, with respect to 100 parts by mass of (E) the synthetic resin.

In the resin composition according to the present embodiment, the amount of (D) the nucleating agent can be, for example, but is not limited particularly to, 0.001 to 10 parts by mass with respect to 100 parts by mass of (E) the synthetic resin. In terms of further improving the mechanical characteristics and color tone of the resin composition, the amount of (D) the nucleating agent is preferably 0.005 parts by mass or more, more preferably 0.01 parts by mass or more, still more preferably 0.05 parts by mass or more, with respect to 100 parts by mass of (E) the synthetic resin. In addition, in terms of sufficiently inhibiting the generation of bloom and the migration of (D) the nucleating agent, the amount of (D) the nucleating agent is preferably 5 parts by mass or less, more preferably 3 parts by mass or less, still more preferably 1 part by mass or less, still more preferably 0.5 parts by mass or less, with respect to 100 parts by mass of (E) the synthetic resin.

In the resin composition according to the present embodiment, the amount of (D) the nucleating agent can be, for example, 0.01 to 100 parts by mass, with respect to 100 parts by mass of (A) the cellulose nanofiber. In terms of further improving the mechanical characteristics and color tone of the resin composition, the amount of (D) the nucleating agent is preferably 0.1 parts by mass or more, more preferably 0.5 parts by mass or more, with respect to 100 parts by mass of (A) the cellulose nanofiber. In the same terms, the amount of (D) the nucleating agent is preferably 50 parts by mass or less, more preferably 30 parts by mass or less, still more preferably 10 parts by mass or less, with respect to 100 parts by mass of (A) the cellulose nanofiber.

The resin composition according to the present embodiment preferably further contains (B) an alcohol compound. In this case, the color tone of the resin composition is further improved. Here, examples of (B) the alcohol compound include the same alcohol compounds as enumerated as (B) the alcohol compound that may be contained in the above-mentioned additive composition.

(B) the alcohol compound contained in the resin composition according to the present embodiment preferably contains at least one selected from the group consisting of tris(2-hydroxyalkyl)isocyanurate and compounds represented by the general formulae (2) to (5), more preferably contains at least one selected from the group consisting of tris(2-hydroxyalkyl)isocyanurate, compounds represented by the general formula (2), and compounds represented by the general formula (3).

In cases where the resin composition according to the present embodiment contains (B) the alcohol compound, the amount of (B) the alcohol compound can be, for example, but is not limited particularly to, 0.005 to 50 parts by mass with respect to 100 parts by mass of (E) the synthetic resin. The amount of (B) the alcohol compound is preferably 0.05 to 30 parts by mass, more preferably 0.1 to 20 parts by mass, still more preferably 0.5 to 10 parts by mass, with respect to 100 parts by mass of (E) the synthetic resin.

In cases where the resin composition according to the present embodiment contains (B) the alcohol compound, the amount of (B) the alcohol compound can be, for example, 0.01 to 100 parts by mass with respect to 100 parts by mass of (A) the cellulose nanofiber. In terms of further improving the heat resistance of the resin composition, the amount of (B) the alcohol compound is preferably 0.1 parts by mass or more, more preferably 1 part by mass or more, still more preferably 5 parts by mass or more, still more preferably 10 parts by mass or more, particularly preferably 15 parts by mass or more, with respect to 100 parts by mass of (A) the cellulose nanofiber. In the same terms, the amount of (B) the alcohol compound is preferably 80 parts by mass or less, more preferably 60 parts by mass or less, still more preferably 50 parts by mass or less, with respect to 100 parts by mass of (A) the cellulose nanofiber.

The resin composition according to the present embodiment preferably further contains (C) an antioxidant. In this case, the heat resistance of the resin composition is further improved. Here, examples of (C) the antioxidant include the same antioxidants as enumerated as (C) the antioxidant that may be contained in the above-mentioned additive composition.

In cases where the resin composition according to the present embodiment contains (C) the antioxidant, the amount of (C) the antioxidant can be, for example, 0.01 to 100 parts by mass with respect to 100 parts by mass of (A) the cellulose nanofiber. In terms of further improving the heat resistance of the resin composition, the amount of (C) the antioxidant is preferably 0.1 parts by mass or more, more preferably 0.5 parts by mass or more, with respect to 100 parts by mass of (A) the cellulose nanofiber. In the same terms, the amount of (C) the antioxidant is preferably 50 parts by mass or less, more preferably 30 parts by mass or less, still more preferably 10 parts by mass or less, with respect to 100 parts by mass of (A) the cellulose nanofiber.

In cases where the resin composition according to the present embodiment contains (C) the antioxidant, the amount of (C) the antioxidant can be, for example, 0.001 to 10 parts by mass with respect to 100 parts by mass of (E) the synthetic resin. In terms of further improving the heat resistance of the resin composition, the amount of (C) the antioxidant is preferably 0.005 parts by mass or more, more preferably 0.01 parts by mass or more, still more preferably 0.05 parts by mass or more, with respect to 100 parts by mass of (E) the synthetic resin. In addition, in terms of sufficiently inhibiting the generation of bloom and the migration of (C) the antioxidant, the amount of (C) the antioxidant is preferably 5 parts by mass or less, more preferably 3 parts by mass or less, still more preferably 1 part by mass or less, still more preferably 0.5 parts by mass or less, with respect to 100 parts by mass of (E) the synthetic resin.

If desired, the resin composition according to the present embodiment may further contain an additive enumerated as another additive that may be contained in the above-mentioned additive composition.

Examples of a method of producing the resin composition according to the present embodiment include, but are not limited particularly to, a method including: a preparation step for preparing (A) a cellulose nanofiber, (D) a nucleating agent, and, if desired, (B) an alcohol compound, (C) an antioxidant, and another additive; and a blending step for blending the components prepared in the preparation step with (E) a synthetic resin. In the blending step, a method of blending the components is, for example, but not limited particularly to, a method of adding the components prepared in the preparation step to (E) the synthetic resin and mixing these components using a mixing apparatus such as an FM mixer, mill roll, Banbury mixer, super mixer, or the like. In addition, the method of producing the resin composition according to the present embodiment may further include, in addition to the preparation step and blending step, a melt-kneading step for melt-kneading a mixture obtained in the blending step using a melt-kneading apparatus such as a single-screw extruder or a twin-screw extruder. Here, the temperature for melt-kneading in the melt-kneading step can be, for example, 180 to 280°C. Furthermore, the method of producing the resin composition according to the present embodiment may further include a granulating step for granulating the kneaded material obtained in the melt-kneading step. Here, examples of a granulating method include, but are not limited particularly to, a method using a granulating apparatus such as a pelletizer. In addition, the resin composition granulated is not limited to any particular shape and can be, for example, in pellets shape. Furthermore, the method of producing the resin composition according to the present embodiment may be a method for adding at least one of (A) the cellulose nanofiber, (D) the nucleating agent, and, if desired, (B) the alcohol compound, (C) the antioxidant, and another additive before or during the polymerization of a synthetic resin monomer or oligomer and adding the remaining component(s) to the resulting polymer.

Next, a molded article according to the present embodiment will be described.

<Molded Article>

A molded article according to the present embodiment is obtained by molding the above-mentioned resin composition.

A molded article according to the present embodiment results in having excellent mechanical characteristics and color tone.

Examples of a method of molding the resin composition include, but are not limited particularly to, known molding methods such as an injection molding method, extrusion molding method, rotational molding method, blow molding method, vacuum molding method, inflation molding method, calender molding method, slush molding method, dip molding method, thermoforming molding method, and foam molding method.

Specific examples of a molded article according to the present embodiment include: automobile interior members such as instrument panels, door trim panels, pillar trims, door trims, pillar garnishes, package trays, rear trays, console boxes, and air conditioning ducts; automobile exterior members such as bumpers, radiator grilles, front grilles, front panels, fenders, pillars, pillar covers, door mirror stay covers, glass run channels, door mirror housings, lamp housings, wheel covers, spoilers, air spoilers, weatherstrips, window malls, belt malls, sunroofs, frontend modules, door modules, backdoor modules, and outside plates; electric appliance housings such as television housings, computer housings, audio housings, refrigerator housings, washer housings, air conditioner housings, game console housings, and mobile phone housings; construction components and materials such as doors, internal wall materials, external wall materials, ceiling materials, roofing materials, tiles, and heatinsulating and heat shield materials; structural members for sports goods, such as tennis rackets, golf clubs, golf balls, and insoles, midsoles, and outsoles for sports shoes; and the like. Among these, automobile interior members or automobile exterior members are suitable because such members make

it possible to effectively utilize the excellent stiffness and heat resistance characteristic of such a molded article. Automobile exterior members are particularly suitable.

EXAMPLES

The present invention will now be described more specifically with reference to Examples. The present invention should not be limited by the following Examples in any way.

<Preparation of Resin Composition>

(Examples 1 to 4 and Comparative Examples 1 to 2)

As listed in Table 1, (A) the cellulose nanofiber, (B) the alcohol compound, (C) the antioxidant, (D) the nucleating agent, and (E) the synthetic resin were supplied in the respective blending amounts listed in Table 1, and together with these components, 0.05 parts by mass of fatty acid metal salt (calcium stearate) was supplied. The components supplied were mixed uniformly. The resulting mixture was supplied into a twin-screw extruder (Labo Plastomill Micro, manufactured by Toyo Seiki Seisaku-sho, Ltd.), melt-kneaded under conditions at a melting temperature of 230°C and at a screw speed of 50 rpm, and then granulated to give pellets. The resulting pellets were dried at 80°C for 6 hours, and then used as resin compositions in Examples 1 to 4 and Comparative Examples 1 to 2. In Table 1, the unit of the blending amount of each component is part(s) by mass.

The components used as the raw materials for the resin compositions in Examples 1 to 4 and Comparative Examples 1 to 2 are as below-mentioned.

[(A) Cellulose Nanofiber]
(A-1) cellulose nanofiber in polypropylene masterbatch (CNF-mixed PP masterbatch, manufactured by GS Alliance Co., Ltd.) containing 40 mass% cellulose nanofiber
[(D) Nucleating Agent]
(D-1) sodium 2,2'-methylenebis(4,6-di-tert-butylphenyl)phosphate
[(B) Alcohol Compound]

(B-1) dipentaerythritol
(B-2) pentaerythritol
(B-3) tris(2-hydroxyethyl)isocyanurate

[(C) Antioxidant]

(C-1) tetrakis[methylene-3-(3',5'-*tert*-butyl-4'-hydroxyphenyl)propionate]methane
(C-2) tris(2,4-di-tert-butylphenyl)phosphite

[(E) Synthetic Resin]

(E-1) homopolypropylene (the melt flow rate of which is 8 g/10 min at 230°C and at a load of 2.16 kg)
(E-2) polypropylene in polypropylene masterbatch (CNF-mixed PP masterbatch, manufactured by GS Alliance Co., Ltd.) containing 40 mass% cellulose nanofiber

<Characteristics Evaluation>

(Mechanical Characteristics)

The flexural moduli of the resin compositions in Examples 1 to 4 and Comparative Examples 1 to 2 were measured and regarded as the indexes for the mechanical characteristics. Specifically, the resin composition pellets in Examples 1 to 4 and Comparative Examples 1 to 2 were dried at 80°C for 8 hours, and then injection-molded using an injection molding machine (EC-220, manufactured by Toshiba Machine Co., Ltd.) under conditions at a resin temperature of 230°C and a mold temperature of 40°C to produce bending test pieces, 80 mm × 10 mm × 4 mm each. These test pieces were left to stand at a temperature of 23°C and a humidity of 50% in a thermohygrostat for 48 hours, and then taken out of the thermohygrostat. The flexural modulus (MPa) of the test piece was measured using a bending tester (AG-IS, manufactured by Shimadzu Corporation) in accordance with ISO178. The results are listed in Table 1.

(Color Tone)

The color differences $E^*_{ab}$ of the resin compositions in Examples 1 to 4 and Comparative Examples 1 to 2 were measured and regarded as the indexes for the color tone. Specifically, the pellets of the resin compositions in Examples 1 to 4 and Comparative Examples 1 to 2 were used to measure the colors of the resin compositions by a reflection method using a spectrocolorimeter (Spectrophotometer SD3000, manufactured by Nippon Denshoku Industries Co., Ltd.) in accordance with JIS Z8722:2009. From the measurement results obtained, the color difference $\Delta E^*_{ab}$ from a standard white plate ($L^* = 99.76$, $a^* = -0.05$, and $b^* = 0.27$) was calculated in accordance with JIS Z 8730:2009, and regarded as the index for the color tone of the resin composition. The results are listed in Table 1.

(Crystallization Temperature)

The crystallization temperatures of the resin compositions in Examples 1 to 4 and Comparative Examples 1 to 2 were measured by differential thermal analysis. Specifically, a measurement was made as follows: the pellets of the resin compositions were supplied into a differential scanning calorimeter (DIAMOND, manufactured by Perkin Elmer Co., Ltd.), heated under a nitrogen atmosphere from room temperature to 230°C at a rate of 50°C/min, held for 20 minutes, and then cooled to 50°C at -10°C/min. The peak top temperature of the exothermic peak in the cooling process was regarded as the crystallization temperature (°C). The results are listed in Table 1.

(Heat Resistance)

The pellets of each of the resin compositions in Examples 1 to 4 and Comparative Examples 1 to 2 were sandwiched between two glass plates, and hot-pressed at a temperature of 230°C to produce a film having a thickness of 0.2 mm. The film thus obtained was heated at 150°C in a gear oven for 18 hours in a heat resistance test. The yellowness index (YI) of the film before and after the heat resistance test was measured by a reflection method using a spectrocolorimeter (Spectrophotometer SD3000, manufactured by Nippon Denshoku Industries Co., Ltd.). Then, a difference ΔYI between the YI after the heat resistance test and the YI before the heat resistance test was calculated, and regarded as the index for the heat resistance of the resin composition. The results are listed in Table 1.

[Table 1]

| | | Example 1 | Example 2 | Example 3 | Example 4 | Comparative Example 1 | Comparative Example 2 |
|---|---|---|---|---|---|---|---|
| (E) Synthetic Resin | (E-1) | 85 | 85 | 85 | 85 | 85 | 100 |
| | (E-2) | 15 | 15 | 15 | 15 | 15 | - |
| (A) Cellulose Nanofiber | (A-1) | 10 | 10 | 10 | 10 | 10 | - |
| (D) Nucleating Agent | (D-1) | 0.1 | 0.1 | 0.1 | 0.1 | - | 0.1 |
| (B) Alcohol Compound | (B-1) | - | 1 | - | - | - | - |
| | (B-2) | - | - | 0.8 | - | - | - |
| | (B-3) | - | - | - | 1.7 | - | - |
| (C) Antioxidant | (C-1) | 0.1 | 0.1 | 0.1 | 0.1 | 0.1 | 0.1 |
| | (C-2) | 0.1 | 0.1 | 0.1 | 0.1 | 0.1 | 0.1 |
| Flexural Modulus (MPa) | | 2100 | 2150 | 2130 | 2110 | 2050 | 1970 |
| Color Tone ($\Delta E^*_{ab}$) | | 51.0 | 51.4 | 51.2 | 50.4 | 58.0 | 18.7 |
| Crystallization Temperature (°C) | | 128.0 | 128.3 | 128.5 | 129.5 | 122.7 | 129.4 |
| Heat Resistance (ΔYI) | | 32.8 | 4.0 | 9.3 | 5.4 | 30.5 | 0.1 |

The results mentioned in Table 1 have revealed that the resin compositions in Examples 1 to 4 have excellent mechanical characteristics and color tone. On the other hand, the resin compositions in Comparative Examples 1 to 2 did not have sufficient mechanical characteristics or color tone.

The above-mentioned results have verified that the additive composition according to the present invention makes it possible to improve the mechanical characteristics and color tone of a cellulose nanofiber-containing resin composition.

## Claims

1. An additive composition comprising:

    (A) a cellulose nanofiber; and
    (D) a nucleating agent.

2. The additive composition according to claim 1, wherein (D) the nucleating agent comprises an aromatic phosphate metal salt represented by the following general formula (1):

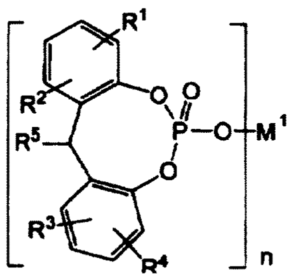

(1)

where $R^1$ to $R^5$ independently represent a hydrogen atom or a linear or branched $C_{1-6}$ alkyl group; n represents 1 or 2; when n is 1, $M^1$ represents an alkali metal or dihydroxyaluminum; and, when n is 2, $M^1$ represents an alkaline earth metal, zinc, or hydroxy aluminum.

3. The additive composition according to claim 1 or 2, further comprising (B) an alcohol compound.

4. The additive composition according to any one of claims 1 to 3, further comprising (C) an antioxidant.

5. The additive composition according to claim 4, wherein (C) the antioxidant comprises at least one selected from the group consisting of phenol antioxidants and phosphorus antioxidants.

6. A resin composition comprising:

    (A) a cellulose nanofiber;
    (D) a nucleating agent; and
    (E) a synthetic resin.

7. A molded article obtained by molding the resin composition according to claim 6.

## INTERNATIONAL SEARCH REPORT

International application No. PCT/JP2021/026678

A. CLASSIFICATION OF SUBJECT MATTER
Int. Cl. C08K5/053(2006.01)i, C08K5/13(2006.01)i, C08K5/3477(2006.01)i, C08K5/49(2006.01)i, C08L1/00(2006.01)i, C08L101/00(2006.01)i
FI: C08L1/00, C08K5/053, C08K5/3477, C08K5/13, C08K5/49, C08L101/00
According to International Patent Classification (IPC) or to both national classification and IPC

B. FIELDS SEARCHED
Minimum documentation searched (classification system followed by classification symbols)
Int. Cl. C08K5/053, C08K5/13, C08K5/3477, C08K5/49, C08L1/00, C08L101/00

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2019-178267 A (OSAKA GAS CO., LTD.) 17 October 2019 (2019-10-17), claims, paragraphs [0031], [0035], [0036], examples | 1-3, 6-7<br>4-5 |
| X<br>Y<br>A | CN 104592753 A (TECHNICAL INSTITUTE OF PHYSICS AND CHEMISTRY, CHINESE ACADEMY OF SCIENCES) 06 May 2015 (2015-05-06), claims, examples | 6-7<br>4-5<br>1-3 |
| X<br>Y<br>A | JP 2016-160267 A (THE JAPAN STEEL WORKS, LTD.) 05 September 2016 (2016-09-05), claims, paragraph [0020], examples | 6-7<br>4-5<br>1-3 |
| X<br>Y<br>A | KR 10-2019-0018131 A (HARM, JI YEON) 21 February 2019 (2019-02-21), claims, examples | 6-7<br>4-5<br>1-3 |

☒ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17.08.2021 | 24.08.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/026678

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 6704551 B1 (CHUETSU PULP & PAPER CO., LTD.) 03 June 2020 (2020-06-03), claims, examples | 6-7<br>1-5 |
| X<br>A | JP 2019-171871 A (KYOTO UNIVERSITY) 10 October 2019 (2019-10-10), claims, examples | 6-7<br>1-5 |
| P, A | WO 2020/145398 A1 (ADEKA CORP.) 16 July 2020 (2020-07-16), entire text | 1-7 |

Form PCT/ISA/210 (continuation of second sheet) (January 2015)

**INTERNATIONAL SEARCH REPORT**
Information on patent family members

International application No.
PCT/JP2021/026678

| Patent Documents referred to in the Report | Publication Date | Patent Family | Publication Date |
|---|---|---|---|
| JP 2019-178267 A | 17.10.2019 | (Family: none) | |
| CN 104592753 A | 06.05.2015 | (Family: none) | |
| JP 2016-160267 A | 05.09.2016 | US 2018/0037704 A1<br>claims, paragraph [0057], examples<br>WO 2016/136881 A1<br>EP 3263636 A1<br>KR 10-2017-0107547 A<br>CN 107428977 A | |
| KR 10-2019-0018131 A | 21.02.2019 | (Family: none) | |
| JP 6704551 B1 | 03.06.2020 | (Family: none) | |
| JP 2019-171871 A | 10.10.2019 | (Family: none) | |
| WO 2020/145398 A1 | 16.07.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6360954 B
- JP 2010132927 A
- US 6552131 B1
- JP 2016023254 A